# EUROPÄISCHE PATENTANMELDUNG

(11) **EP 1 656 837 A2**
(43) Veröffentlichungstag der Anmeldung: **17.05.2006**
(21) Anmeldenummer: 05024058.9
(22) Anmeldetag: 04.11.2005
(51) Int. Cl.: A23L 1/0522, A23P 1/12

(54) **Verfahren zur Herstellung eines kalt anrührbaren Grundstoffs zur Verwendung bei Cremes, Pasten und dergleichen**

(30) Priorität: 12.11.2004 DE 102004054681
(71) Anmelder: KAMPFFMEYER FOOD SERVICE GmbH, 21107 Hamburg (DE)
(72) Erfinder: Fischer, Thomas, Dr., 21075 Hamburg (DE); Driller, Karl Heinz, 21635 Jork (DE)
(74) Vertreter: Schildberg, Peter

(57) **Zusammenfassung**

Verfahren zur Herstellung eines kalt anrührbaren Grundstoffs zur Verwendung bei Cremes, Pasten und dergleichen, mit folgenden Schritten:
- ein stärkehaltiger Rohstoff wird zusammen mit einem komplexbildenden Zusatz unter Zugabe von Fremdwasser bei Verfahrensbedingung derart extrudiert, dass die Stärkekomstruktur erhalten bleibt, und
- das Extrudat wird nachfolgend getrocknet und zu dem Grundstoff vermahlen.

## Beschreibung

Die Erfindung betrifft ein Verfahren zur Herstellung eines kalt anrührbaren pulverförmigen Grundstoffs, das zur Verwendung bei Cremes, Pasten und dergleichen geeignet ist.

Aus EP 0 150 715 ist ein Verfahren zur Herstellung einer dispergierbaren Stärke bekannt, bei dem die Stärke unter Zugabe eines Emulgators in Anwesenheit von Wasser thermisch behandelt wird. Der Emulgator weist, bezogen auf das Trockengewicht der Stärke, einen Fettsäure-Monoester in einem Anteil von 1 bis 5 Gew.-% auf. Als Stärke wird Kartoffelstärke eingesetzt. Kartoffelstärke zeichnet sich durch einen hohen Phosphatgehalt und eine spezielle Kristallinität aus.

US 4,670,272 beschreibt ein Verfahren zur Herstellung einer thermostabilen Creme. Die Creme besteht aus einer Mischung aus Hydrocolloiden, Maissirup, modifizierter Stärke und Albumin. Die Creme muß für die gewünschte Textur erhitzt werden.

In US 5,154,942 wird eine fettreduzierte Creme beschrieben, die als Füllung für Backwaren und Snacks geeignet ist. Zur Herstellung dieser Creme wird Zucker mit vorverkleisterter Stärke gemischt und diese Mischung in wässrigem Sirup dispergiert. Die Suspension wird hydriert und anschließend werden Öl, Fett und Emulgatoren zugesetzt.

US 5,100,475 beschreibt ein Verfahren zur Herstellung einer heißdispergierbare Kartoffelstärke für einen Suppen- und Soßeneindicker. Die Kartoffelstärke wird hierbei zusammen mit einem Emulgator extrudiert.

US 2002/0152931 A1 beschreibt ein Stärkeemulgatorgemisch, zur Herstellung von Gel und Pasten. Hierbei wird Stärke und ein Emulgator in einem wässerigen Medium einer Behandlung unterzogen, um die gesamte Stärke aufzuschließen. Dabei werden alle Stärkekörner vollständig zerstört und die Amylose aus den Stärkekörnern vollständig freigesetzt. Der verwendete Rohstoff besitzt einen Amylosegehalt von über 30 % oder alternativ einen Gehalt an 20 % kurzkettiger Amylose.

US 2001/002628 A1 beschreibt ein Instanteindicker für Soßen und Suppen. Hierzu wird Mehl, Stärke, Wasser, Fett und ein Emulgator gemeinsam extrudiert unter Bedingungen, bei denen die Stärkekörner ihre kristalline Struktur verlieren, jedoch ihre Körnigkeit behalten.

Aus Patent Abstracts of Japan JP 72143659 A ist ein modifiziertes Weizenmehl bekannt, das kartoffelpüreeartige Eigenschaften annehmen kann. Hierzu wird Weizenmehl und ein Monoglycerin einer Fettsäure in einem Extruder extrudiert. Das Kartoffelpüree besitzt eine rauhe, ungleichmäßige, sämige Textur.

Der Erfindung liegt die Aufgabe zugrunde, einen pulverförmigen, trockenen Grundstoff zur Herstellung von fettarmen Cremes, streichfähigen Pasten, Desserts u.ä. herzustellen, der im wesentlichen bei Zimmertemperatur dispergierbar ist und in Verbindung mit Wasser eine Paste mit glatter, cremeartiger Textur ergibt.

Erfindungsgemäß wird die Aufgabe durch das Verfahren nach Anspruch 1 gelöst. Bevorzugte Ausgestaltungen bilden die Gegenstände der Unteransprüche.

Bei dem erfindungsgemäßen Verfahren wird ein kalt anrührbarer Grundstoff hergestellt, indem ein stärkehaltiger Rohstoff zusammen mit einem komplexbildenden Zusatz unter Zugabe von Fremdwasser extrudiert wird. Das Extrudat wird getrocknet und zu dem Grundstoff vermahlen. Bevorzugt ist als komplexbildender Zusatz ein Monoglycerid vorgesehen, das beispielsweise aus Speisefettsäuren mit einem hohen Anteil an Monostearat in Pulverform oder in hydrierter Form besteht. Alternativ können Kalzium-, Natriumsteroyl-2-lactat, Datem (Diacetylweinsäureester von Monoglyzeriden), Polysorbat, Lactem (Milchsäureester von Monoglyzeriden), Steroylmilchsäure und Zuckeresther eingesetzt werden. Als Komplexbildner sind ebenfalls Lecithine und freie Fettsäuren bekannt, wobei bei letzteren gegebenenfalls zusätzlich Anitoxidantien erforderlich sind. Mit dem erfindungsgemäßen Verfahren wird in besonders einfacher Weise ein kalt dispergierbarer Grundstoff hergestellt, der ausreichend thermostabil für eine weitere Verarbeitung ist.

Aus US 5,989,350 war bereits ein Verfahren zur Herstellung einer hitzebehandelten Kartoffelstärke bekannt, die in wässriger Suspension eine hohe Heißviskosität besitzt. Die Kartoffelstärke wird hierbei durch Heißluftbehandlung in Gegenwart von Monoglyceriden modifiziert. Für das Produkt wird aber nur eine heiße Dispergierbarkeit erzielt. So beschreibt US 5,100,475 ebenfalls eine modifizierte Kartoffelstärke, die in Gegenwart von mindestens 1 % Monoglyceriden einer Hitzebehandlung unterzogen wird, um einen in kochendem Wasser gut dispergierbaren Binder oder Eindicker zu erhalten. Keines der bekannten Mehle ist hierbei kalt dispergierbar.

In einer bevorzugten Ausgestaltung wird als stärkehaltiger Rohstoff ein Getreiderohstoff vorgesehen, der bevorzugt einen Eiweißgehalt von 0 bis 15 %, bevorzugt von 0 bis 9% aufweist.

Als Getreiderohstoff wird bevorzugt Weizen- und/oder Reismehl, entweder ausschließlich oder teilweise, verwendet. Bevorzugt wird hierbei Langkornreismehl eingesetzt.

Dem stärkehaltigen Rohstoff wird 0,1 bis 5 Gew.-% von dem Komplexbildner oder Mischungen dieser - insbesondere Monoglycerid - zugemischt, dabei erfolgt bevorzugt die Zugabe von 1 bis 2 Gew.-% Monoglycerid.

Bei dem erfindungsgemäßen Verfahren wird das Extrudat bevorzugt in einem Kochextruder hergestellt, der vorzugsweise in einem Temperaturbereich von 90 bis 180°C, besonders bevorzugt in einem Bereich von 130°C bis 150°C, arbeitet. Der Druckbereich in dem Extruder liegt bei einem Wert zwischen 15 bis 200 bar.

Während der Extrusion wird eine Rohstoffeuchte von 10 bis 30%, bevorzugt im Bereich von 15 bis 18% verwendet.

Das fertige Extrudat wird auf eine Feuchtigkeit von 5 bis 15%, bevorzugt auf ungefähr 10% getrocknet.

In einer bevorzugten Ausgestaltung des erfindungsgemäßen Verfahrens wird nur der stärkehaltige Rohstoff zusammen mit dem komplexbildenden Zusatz unter Zugabe von Wasser extrudiert. Auf die Zugabe von weiteren Bestandteilen wie beispielsweise Fett und Öl kann verzichtet werden. Das erfindungsgemäße Verfahren schafft eine kaltdispergierbare Ausgangssubstanz, die bereits bei Zimmertemperatur Wasser bindet. Hierzu werden die Extrusionsbedingungen, insbesondere die Bedingung für Druck, Temperatur und Feuchtigkeit derart eingestellt, daß die kristalline Struktur der Stärke, insbesondere die äußere kristalline Struktur der Stärke, aufgeschmolzen und bei der Extrusion die körnige Integrität der Stärkekörner nicht beschädigt wird, sondern erhalten bleibt.

Die so hergestellten Stärkekörner können bereits bei Raumtemperatur Wasser binden.

Als Getreiderohstoff wird bei dem erfindungsgemäßen Verfahren bevorzugt auch eine waxy-Stärke eingesetzt, deren Amylosegehalt weniger als ein Gew.-% beträgt.

Das erfindungsgemäße Verfahren wird nachfolgend anhand einzelner Beispiele näher beschrieben.

Der stärkehaltige Rohstoff wird vor der Extrusion mit dem komplexbildenden Agents gemischt, das beispielsweise extrahierte Monoglyceride aus Speisefettsäure mit einem hohen Anteil an Monostearat in Pulverform oder in hydrierter Form aufweist. Die Monoglyceride werden in einer Konzentration von ungefähr 0,5 bis 5%, bevorzugt jedoch in einer Konzentration von 1 bis 2% zugegeben.

Die Grundrohstoffe werden einem Extruder über Trockenstoff- oder Flüssigdosierer zugeführt. Wahlweise kann an dem Extruder eine Vorkonditionierung erfolgen. Im mittleren Teil des Extruders wird dem Rohstoffgemisch Fremdwasser zugesetzt, so daß die Extrusion bei einer Rohstoffeuchte zwischen 10 bis 30%, vorzugsweise jedoch bei 15 bis 18% erfolgt. Als Extruder wird dabei ein Doppelschneckenextruder bevorzugt verwendet, der mindestens zwei Segmente besitzt. Die maximale Extrusionstemperatur wird dabei im letzten Segment eingestellt, so daß die maximale Massetemperatur an einer Düsenplatte am Austritt anliegt, an dem auch die Messung von Massetemperatur und Druck. Die Extrusionstemperatur wird auf ungefähr 90 bis 180°C, bevorzugt auf 120 bis 150°C eingestellt. Es wird bei Drücken zwischen 40 und 200 bar gearbeitet. Der Extrudatstrang wird direkt nach Austritt aus der Düse geschnitten. Die geschnitten Extrudate werden anschließend auf eine Restfeuchte von ungefähr 10 % getrocknet. Nach der Trocknung werden die Extrudate zerkleinert und beispielsweise mit einer Hammermühle, Riffel-/Brechwalzsystemen oder über eine Stiftmühle gemahlen. Das erhaltene Mehl kann fraktioniert werden, wobei sich herausgestellt hat, daß die einzelnen Fraktionen durchaus unterschiedliche haptische und technologische Eigenschaften bei der weiteren Verarbeitung besitzen.

Der hergestellte Grundstoff läßt sich in kaltem Wasser anrühren, wobei das Material ein Vielfaches seines Eigengewichts an Wasser bindet. Der mit Wasser angerührte Grundstoff nach dem erfindungsgemäßen Verfahren erzeugt dabei eine glatte, gleichmäßige, fettähnliche Masse. Diese fettähnliche Massetextur konnte bisher nicht mit physikalisch modifizierten stärkehaltigen Rohstoffen erzielt werden.

Die bisher bekannten modifizierten Mehle ergeben in wässriger Suspension ein mehr oder weniger viskoelastisches Gel. Mit der Erfindung werden aber Pasten bereitgestellt, die aus dichtgepackten, gequollenen, elastischen Stärkekörnern bestehen und eine fettähnliche Struktur besitzen. Mischungen im Sinne der Erfindung ergeben mit entsprechenden Zusatzstoffen, wie Emulgatoren und Proteinen mit Wasser aufschlagfähige Massen.

Nachfolgend wird ein Beispiel zur Herstellung angegeben:

### Beispiel 1

Reismehl wird mit 1% eines pulverförmigen High-Monoglyceridprodukts versetzt und homogen vermischt. Solche High-Monoglyceridprodukte sind an sich bekannt und käuflich erhältlich. Anschließend wird der Rohstoff direkt über einen Dosierer dem Extruder oder zunächst einer der Extrusion vorgeschalteten Konditionierung zugeführt. Der Extruder besteht aus mehreren Segmenten, wobei die Segmente unmittelbar vor der Kopfplatte auf 90°C temperiert werden. Eine Austrittsdüse an dem Extruder besitzt zwei Öffnungen, jeweils mit einem Durchmesser von 5 mm. In der Düse wird die aus Temperierung und Scherung resultierende Temperatur der Masse gemessen. Sie liegt bei 120°C und einem resultierenden Druck von 70 bar. Die Kraftaufnahme beträgt hierbei 27 A. Nach Austritt aus der Düse wird der Extrudatstrang geschnitten und auf eine Feuchte von unter 10% getrocknet. Anschließend werden die geschnittenen Chunks auf einer Stiftmühle vermahlen. Danach erfolgt eine Sichtung und der Anteil mit einem Partikelgrößendurchmesser von kleiner 150 µm wird als Grundstoff verwendet. Der extrudierte Grundstoff wird vor der Verwendung mit allen anderen Trockenzutaten homogen vermischt. Die Mischung wird mit Wasser suspendiert und mit einem Mixgerät oder einem Rührwerk aufgeschlagen.

Nachfolgend werden einige Produktbeispiele angegeben, die von dem erfindungsgemäß hergestellten Grundstoff Gebrauch machen:

### Produktbeispiel 1

20% mit 1% Monoglycerid extrudiertes Weizenmehl (Proteingehalt: 7%), 15% Puderzucker, 60% Wasser, 3% Öl, 2% Aufschlagemulgator, Irish Creme, löslicher Kaffee werden in einer Anschlagmaschine für ungefähr 10 Min. angerührt. Das Ergebnis ist eine glatte, relativ schwere Masse, die auch als Back- oder Füllcreme geeignet ist.

### Produktbeispiel 2

18% mit 1% Monoglycerid extrudiertes Langkornreismehl, 18% Zucker, 9% Hühnereiweißpulver, 50,5% Wasser. Die Masse wird in einer Anschlagmaschine wieder für 10 Min. auf höchster Stufe aufgeschlagen. Das Ergebnis besitzt eine relativ leichte und glatte, kurze Textur.

### Produktbeispiel 3

8% mit 1% Monoglycerid extrudierte Langkornreisstärke (0% Protein), 12% Zucker, 3% Aufschlagemulgator, 2,5% Erdbeerfruchtpulver, 0,1% Erdbeeraroma, 0,1% Salz, 0,1% Zitronensäurepulver, 0,6% Xanthan, 73,6% Wasser werden miteinander gemischt und in einem Küchenmixer für 3 bis 4 Min. aufgeschlagen. Das Ergebnis ist eine fruchtig-cremige Dessertcreme.

### Produktbeispiel 4

15% mit 1% Monoglycerid extrudiertes Langkornreismehl, 15% Zucker, 3% Aufschlagemulgator, 67% Wasser. Die Masse wird mit einer Aufschlagmaschine mit Planetenrührwerk 10 Min. auf höchster Stufe aufgeschlagen, wobei diese eine sehr leichte, schaumige Struktur erhält. Die Masse ist stabil und besitzt eine eischneeartige Beschaffenheit mit einem Litergewicht von etwa 250 g/l oder weniger.

## Patentansprüche

1. Verfahren zur Herstellung eines kalt anrührbaren Grundstoffs zur Verwendung bei Cremes, Pasten und dergleichen, mit folgenden Schritten:
- ein stärkehaltiger Rohstoff wird zusammen mit einem komplexbildenden Zusatz unter Zugabe von Fremdwasser bei Verfahrensbedingung derart extrudiert, dass die Stärkekornstruktur erhalten bleibt, und
- das Extrudat wird nachfolgend getrocknet und zu dem Grundstoff vermahlen.

2. Verfahren nach Anspruch 1, **dadurch gekennzeichnet, daß** als komplexbildender Zusatz ein Monoglycerid vorgesehen ist.

3. Verfahren nach Anspruch 1, **dadurch gekennzeichnet, dass** als komplexbildender Zusatz ein Kalzium, Natriumsteroyl-2-lactat, Datem (Diacetylweinsäureester von Monoglyzeriden), Polysorbat, Lactem (Milchsäureester von Monoglyzeriden), Steroylmilchsäure und/oder Zuckeresther vorgesehen ist.

4. Verfahren nach Anspruch 1 bis 3, **dadurch gekennzeichnet, daß** als stärkehaltiger Rohstoff ein Getreiderohstoff vorgesehen ist.

5. Verfahren nach Anspruch 4, **dadurch gekennzeichnet, daß** der Getreiderohstoff Weizenmehl einen Eiweißgehalt von 0 bis 9% aufweist.

6. Verfahren nach einem der Ansprüche 1 bis 5, **dadurch gekennzeichnet, daß** der Getreiderohstoff entweder teilweise oder vollständig aus Weizen und/oder Reis, bevorzugt aus Langkornreis, besteht.

7. Verfahren nach einem der Ansprüche 1 bis 6, **dadurch gekennzeichnet, daß** zu dem stärkehaltigen Rohstoff 0,1 bis 5 Gew.-% Monoglycerid gemischt wird.

8. Verfahren nach Anspruch 7, **dadurch gekennzeichnet, daß** zu dem stärkehaltigen Rohstoff 1 bis 2% Monoglycerid gemischt wird.

9. Verfahren nach einem der Ansprüche 1 bis 8, **dadurch gekennzeichnet, daß** das Extrudat mit einem Kochextruder hergestellt wird.

10. Verfahren nach einem der Ansprüche 1 bis 9, **dadurch gekennzeichnet, daß** der Extruder bei einer Temperatur von 80°C bis 180°C arbeitet.

11. Verfahren nach Anspruch 10, **dadurch gekennzeichnet, daß** der Extruder bei einer Temperatur von 100°C bis 150°C arbeitet.

12. Verfahren nach Anspruch 11, **dadurch gekennzeichnet, daß** der Extruder bei einem Druck von 20 bis 300 bar arbeitet.

13. Verfahren nach einem der Ansprüche 1 bis 12, **dadurch gekennzeichnet, daß** der Extruder bei einem Druck von 40 bis 200 bar arbeitet.

14. Verfahren nach einem der Ansprüche 1 bis 13, **dadurch gekennzeichnet, daß** die Extrusion bei einer Rohstoffeuchte von 10 bis 30% erfolgt.

15. Verfahren nach Anspruch 14, **dadurch gekennzeichnet, daß** die Extrusion bei einer Rohstoffeuchte von 15 bis 18 % erfolgt.

16. Verfahren nach einem der Ansprüche 1 bis 15, **dadurch gekennzeichnet, daß** das Extrudat auf eine Feuchte von unter 2 bis 15%, bevorzugt 5 bis 10%, getrocknet wird.

17. Verfahren nach einem der Ansprüche 1 bis 16, **dadurch gekennzeichnet, daß** nur der stärkehaltige Rohstoff zusammen mit dem komplexbildenden Zusatz unter Zugabe von Wasser extrudiert wird.

18. Verfahren nach einem der Ansprüche 1 bis 17, **dadurch gekennzeichnet, daß** die Extrusion bei Bedingungen für Druck, Temperatur und Feuchtigkeit erfolgt, für die die kristalline Struktur der Stärke aufgeschmolzen wird, aber die Integrität der Stärkekörner in ihrem granulären Zustand erhalten bleibt.

19. Verfahren nach einem der Ansprüche 1 bis 18, **dadurch gekennzeichnet, daß** als Getreiderohstoff eine waxy-Stärke mit einem Amylosegehalt von weniger als 1 Gew.-% vorgesehen ist.

20. Verfahren nach Anspruch 18 oder 19, **dadurch gekennzeichnet, daß** nach der Extrusion ein aufgeweitetes Stärkekorn vorliegt, das bei Raumtemperatur Wasser bindet.
